(19) **Europäisches Patentamt**

**European Patent Office**

**Office européen des brevets**

(11) **EP 0 980 968 A1**

(12) **EUROPÄISCHE PATENTANMELDUNG**

(43) Veröffentlichungstag:
    23.02.2000  Patentblatt 2000/08

(51) Int. Cl.⁷: **F02B 27/02**

(21) Anmeldenummer: **98115681.3**

(22) Anmeldetag: **20.08.1998**

(84) Benannte Vertragsstaaten:
    **AT BE CH CY DE DK ES FI FR GB GR IE IT LI LU
    MC NL PT SE**
    Benannte Erstreckungsstaaten:
    **AL LT LV MK RO SI**

(71) Anmelder:
    **FILTERWERK MANN & HUMMEL GmbH
    71631 Ludwigsburg (DE)**

(72) Erfinder:
    • **Paffrath, Holger Dr.
      71636 Ludwigsburg (DE)**
    • **Leipelt, Rudolf
      71672 Marbach (DE)**

(74) Vertreter:
    **Aldag, Wolfgang, Dipl.-Ing.
    Spittlerstrasse 21
    70190 Stuttgart (DE)**

(54) **Ansaugvorrichtung für eine Brennkraftmaschine**

(57)    Die Erfindung betrifft eine Ansaugvorrichtung für eine Brennkraftmaschine, mit einer in vorgegebenen Grenzen veränderbaren Geometrie des sich ergebenden Ansaugrohres. Gemäß der Erfindung ist wahlweise eine Resonanz- oder Schwingrohraufladung im gesamten Ansaugrohr herstellbar und die Geometrie jeweils mindestens eines Schwingrohres (S) und eines über ein Resonanzvolumen (43,43) gekoppelten Resonanzrohres (R) ist in vorgegebenen Grenzen stufenlos veränderbar.

Fig.1

## Beschreibung

### Stand der Technik

Die Erfindung betrifft eine Ansaugvorrichtung für eine Brennkraftmaschine nach dem Oberbegriff des Hauptanspruchs.

Eine solche Ansaugvorrichtung ist beispielsweise aus der DE-OS 39 21 081 bekannt. Diese bekannte Ansaugvorrichtung mit einer Saugrohranlage für eine Mehrzylinder-Brennkraftmaschine weist einen zylindrischen Ansaugverteilerraum und zu den einzelnen Zylindern führende Einzelsaugrohre auf, die um den Ansaugverteilerraum herum geführt und in Längsrichtung desselben nebeneinander angeordnet sind. Zur Erzielung von zwei unterschiedlichen Schwingrohrlängen steht jedes einzelne Saugrohr mit dem Ansaugverteilerraum über zwei in einem Winkelabstand voneinander in der Umfangswand des Ansaugverteilerraums vorgesehene Steueröffnungen in Verbindung.

In dem Ansaugverteilerraum dieser bekannten Ansaugvorrichtung ist ein rohrförmiger Drehschieber angeordnet, der für jedes Einzelsaugrohr mindestens einen Steuerschlitz aufweist. Dieser Steuerschlitz steht in einer Endstellung des Drehschiebers mit der ersten Steueröffnung in Verbindung, während die andere Steueröffnung von der Wand des Drehschiebers abgedeckt ist. Dadurch wird eine lange Schwingrohrlänge verwirklicht. Wird der Drehschieber in seine andere Endstellung gedreht, so wird die erste Steueröffnung von der Wand des Drehschiebers abgedeckt, der Steuerschlitz kommt mit der zweiten Steueröffnung in Verbindung, wodurch eine kurze Schwingrohrlänge eingestellt wird.

Ein Nachteil dieser bekannten Einrichtung ist darin zu sehen, daß keine stufenlose Einstellmöglichkeit für die Schwingrohrlänge gegeben ist. Dies bedeutet, daß ein Optimum an Leistungsausbeute nur in zwei eng begrenzten Drehzahlbereichen der Brennkraftmaschine möglich ist. Die bekannten Einrichtungen betreffen dabei immer nur längenveränderliche Schwingrohrsauganlagen.

Es ist weiterhin aus der EP 0 848 145 A2 bekannt, eine stufenlose Veränderung der Schwingrohrlänge bei der Ansauganlage für einen V-Verbrennungsmotor vorzunehmen. Bei dieser Anordnung ist eine Trommel als Drehschieber vorhanden, in die die angesaugte Luft axial eintritt und durch die die Luft in das tangential anliegende Ansaugrohr führbar ist. Durch Drehen der Trommel ist hier die veränderbare Länge des für die Luft wirksamen Ansaugrohres auf einfache Weise einstellbar.

Für sich gesehen ist ebenfalls bekannt, eine Umschaltung zwischen einer sogenannten Schwingrohr- und Resonanzrohraufladung in einer Ansauganlage vorzunehmen.

### Aufgabenstellung

Es ist somit Aufgabe der Erfindung, eine Ansaugvorrichtung zu schaffen, die eine stufenlose Veränderung der Saugrohrgeometrie erlaubt und einfach in modularer Bauweise herstellbar ist.

### Vorteile der Erfindung

Erfindungsgemäß wird die Aufgabe dadurch gelöst, dass bei einer Ansaugvorrichtung der eingangs genannten Art in vorteilhafter Weise ein modulares Saugrohrkonzept, insbesondere für Mehrzylinder-Brennkraftmaschinen mit den Merkmalen des Kennzeichens des Hauptanspruchs realisiert wird.

Das erfindungsgemäße Saugrohrkonzept betrifft eine Ansaugvorrichtung mit einer besonders vorteilhaften Umschaltung zwischen Resonanz- und Schwingrohraufladung der angesaugten Luft. Es wird hierbei ebenfalls eine stufenlose Schwingrohrlängenverstellung und eine stufenlose Resonanzrohrlängenverstellung ermöglicht, wobei auch eine stufige Resonanzrohrquerschnittverstellung durchführbar ist und mit der Schwingrohrsauganlage mitgeschaltet werden kann. Hierdurch besteht die Möglichkeit, durch eine entsprechende Gestaltung der durch das Gehäuse gebildeten äußeren Resonanzrohrwand ein Resonanzrohr je Resonanzsammler verschließen zu können. Alle Verstelleingriffe können mit erfindungsgemäßen Ausführungsformen in vorteilhafter Weise, beispielsweise mit nur einem gemeinsamen Stellmotor, erfolgen; Teilfunktionen, z.B. Resonanzrohrquerschnittsveränderung können dabei aber auch mit einem separatem Stellmotor durchgeführt werden.

Als wesentliche Vorteile des erfindungsgemäßen Saugrohrkonzeptes sind vor allem der modulare Aufbau anzuführen, der das Prinzip der Ansaugvorrichtung auch für z.B. 3- ,4- oder allg. Mehrzylinder-Motoren geeignet macht. Weiterhin sind auf einfache Weise Veränderungen des Resonanz- oder Schwingrohrquerschnitts (z.B. für Motoren einer Familie mit gleichem Zylinderabstand) durch den erfindungsgemäßen Einsatz von Verstellscheiben mit kleinerem oder größerem Außendurchmesser durchzuführen.

Bei weiterer Ausführungsform der erfindungsgemäßen Ansaugvorrichtung mit stufenlos verstellbaren Rohrlängen kann die erwähnte Umschaltung von Resonanzaufladung zu Schwingaufladung auch mit einer anderen Resonanzschaltung durchgeführt werden.

Bei den zuvor beschriebenen Resonanzaufladesysteme ist der Luftaufwand der Brennkraftmaschine in einem gewissen Drehzahlbereich in vorteilhafter Weise verbessert. Die Ursache für das bessere Betriebsverhalten mit Schwingrohraufladung bei diesen Motordrehzahlen liegt darin, daß das Resonanzsystem und das Schwingrohrsystem nur in einem bestimmten Bereich gut aufeinander abgestimmt sind. Bei anderen Drehzahlen bewirkt das dort schlecht abgestimmte Gesamtsystem aus Resonanz- und Schwingrohren eine Verschlechterung des Betriebsverhaltens, so dass dort, wie beschrieben, auf eine Schwingrohraufladung umgeschaltet wird.

Die Umschaltung kann gemäß eines Ausführungsbeispiels dadurch umgangen werden, dass die Längen von Resonanzrohr und Schwingrohr bei jeder Drehzahl optimal aufeinander abgestimmt werden. Es kann dann durchgängig in jedem Betriebspunkt der Brennkraftmaschine ein Resonanzauflädesystem benutzt werden. Der Aufwand für eine besondere Resonanzklappe entfällt hier und das Betriebsverhalten des Motors wird je nach Auslegung sogar verbessert.

Bezüglich der Schwingrohre ist bei niedrigen Drehzahlen eher eine lange, bei hohen Motordrehzahlen eher eine kurze Schwingrohrlänge von Vorteil. Bei den Resonanzrohren verhält sich dieser Zusammenhang ähnlich. Unterschiedlich bei den beiden Rohren ist das Niveau der Rohrlänge und die bei Drehzahlerhöhung unterschiedlich starke Abnahme der Rohrlänge.

Werden mit n die Drehzahl der Brennkraftmaschine und mit LS und LR die Langen von Schwingrohr (LS) und Resonanzrohr (LR) bezeichnet, so gilt für die optimalen Rohrlängen:

$$LS_{opt} = LS_{max} - KS^* \alpha \text{ und}$$

$$LR_{opt} = LR_{max} - KR^* \alpha,$$

wobei KS und KR Konstanten für die Schwingrohre (KS) und Resonanzrohre (KR) sind und $\alpha$ der Verdrehwinkel der Verstellscheiben ausgehend von der langen Rohrstellung ist. Die Konstanten KS und KR können hierbei unterschiedlich sein, d.h. bei einer bestimmten Drehzahlerhöhung müssen die Rohrlängen von Schwingrohr und Resonanzrohr um unterschiedliche Beträge verkürzt werden. Der Zusammenhang zwischen dem Verdrehwinkel $\alpha$ und der Motordrehzahl n ist hierbei motorspezifisch anzupassen.

Die Realisierung einer solchen Resonanzaufladung ist mit einer entsprechenden Abwandlung der zuvor beschriebenen Ausführungsbeispiele auf einfache Weise möglich. Sind die Rohrlängen von Schwingrohr und Resonanzrohr quasi auf einer Scheibe aufgewickelt, so lassen sich Unterschiede in den Konstanten KS und KR einfach durch verschiedene Durchmesser der Verstellscheiben realisieren.

Für den Fall, dass KR kleiner ist als KS, d.h. die Resonanzrohrlänge sich nicht so stark ändert wie die Schwingrohrlänge, läge der Unterschied darin, dass die Verstellscheiben der Resonanzrohre kleiner im Durchmesser wären und das Gehäuse für diese Rohre entsprechend eingezogen wäre, um den Rohrquerschnitt beizubehalten. Für den Fall, daß KS kleiner ist als KR, verhielte sich der Sachverhalt umgekehrt, d.h. die Scheiben der Schwingrohre wären kleiner. Beim Aufbau des Saugrohres nach einem der eingangs beschriebenen Ausführungsbeispiele ist darauf zu achten, dass die axialen Reibflächen an den Verstellscheiben von Schwingrohr und Resonanzrohr auf einem gleichem Radius liegen, auch wenn sich die Außendurchmesser der Verstellscheiben unterscheiden.

Bei dem zuletzt beschriebenen Ausführungsbeispiel kann die Resonanzklappe, d.h. die Scheiben mit Fenstern und gegebenenfalls einer Irisblende und damit im Prinzip die Resonanzschaltung entfallen. Stattdessen würden geschlossene Wände mit mittigem Durchtritt für die Welle den Resonanzsammler abschließen. Der Aufbau des Saugrohres in der erfindungsgemäßen Ansaugvorrichtung bliebe ansonsten unverändert.

Bei einer weiteren vorteilhaften Ausführungsform der erfindungsgemäßen Ansaugvorrichtung wird in vorteilhafter Weise der Aufbau des Gehäuses der Ansaugvorrichtung und insbesondere die interne Abdichttechnik so verbessert, dass das Saugrohr kostengünstiger hergestellt werden kann und dabei auch die Modularisierung gefördert ist.

Die Ansaugvorrichtung wird hierbei nicht mehr längs, d.h. in der Ebene der Drehachse der im Saugrohr enthaltenen Verstellscheiben, sondern senkrecht dazu geteilt. Das umgebende Gehäuse wird ähnlich wie das Innenleben, die Verstellscheiben, aus einzelnen Scheiben aufgebaut. Die ansonsten notwendigen Dichtscheiben entfallen. Stattdessen werden an die Verstellscheiben, vorzugsweise an den äußeren Teil der jeweils aus zwei Teilen aufgebauten Verstellscheibe, Dichtlippen angespritzt

Die Dichtlippen dieser Ausführungsform dichten zwischen den Verstellscheiben und der in das Saugrohr hineinragenden umlaufenden Gehäusewand, die die Funktion der Dichtscheiben übernimmt. Die Verstellscheibe, oder nur deren Teil, der die Dichtlippen trägt, muss hier nicht aus dem Gehäusewerkstoff sein. Das Material soll die Erfordernisse der Dichtlippengeometrie und der Reibung zum Gehäuse berücksichtigen. Die Anforderungen hinsichtlich Maßhaltigkeit und Planlauf an die Verstellscheiben werden mit diesem alternativen Konzept geringer.

Die Verstellscheiben sind nachwievor auf einer Welle aufgefädelt. Sie sind nicht mehr mit einer Feder verspannt. Zumindest an den Stirnseiten des Gehäuses sind Endscheiben mit einer Wellenlagerung vorzusehen. Der Antrieb der Welle erfolgt in vorteilhafter Weise in einer in den Unteransprüchen angegebenen Art und Weise zur stufenlosen Verstellung der jeweiligen Rohrlängen.

Die Gehäusescheiben des zuletzt erwähnten Ausführungsbeispiels können, abgesehen von den Endstücken, die evtl. anders ausgeführt sind, alle identisch sein; die Verstellscheiben ebenso. Bei Ausführungsvarianten mit unterschiedlichem Durchmesser für die jeweilige Schwingrohr- und die Resonanzrohrverstellscheibe gibt es zumindest zwei verschiedene Gehäuseelemente und zwei verschiedene Verstellscheiben. Der modulare Aufbau des Saugrohres wird dadurch deutlich vereinfacht. Je nach der Zylinderzahl der Brennkraftmaschine und dem jeweiligen Saugrohrkonzept werden unterschiedlich viele Verstell- und Gehäusescheiben montiert. Je nach Konzept werden die einzelnen Gehäuse- bzw. Verstellscheiben alle in gleicher Orientierung montiert (z.B. bei Reihenmotor mit nur Schwingrohraufladung) oder wechselweise um z.B. 180° verdreht montiert (z.B. bei Kombination aus Resonanz- und Schwingrohraufladung). Die Rohrabzweige aus diesen Gehäusescheiben hinaus sollten dabei komplett in der Gehäusescheibe liegen. Die entsprechenden Rohrstücke müssen dadurch nicht durch eine Montage zweier benachbarter Gehäusescheiben erzeugt werden, wodurch die Verbindung der Gehäusescheiben untereinander deutlich vereinfacht wird.

Die Verbindung der Gehäusescheiben untereinander kann auf einfache Weise nach dem Nut und Feder Prinzip erfolgen, die Nut und die Feder haben dabei kreisförmig umlaufend eine unveränderte Geometrie. Die Verbindung kann z.B. durch Schnappen, z.B. mit einem Dichtring, oder Schweißen erfolgen. Dazu kann vorteilhafterweise das gesamte Saugrohr vormontiert und vorgespannt werden, um dann in einem Arbeitsgang alle Gehäusescheiben mittels Laserschweißen mit den jeweils benachbarten Scheiben zu verbinden.

Das Saugrohr kann zur Vereinfachung des Prinzips und der Ausführung von den dem Zylinderkopf zugewandten, d.h. stromab des Saugrohrgrundkörpers liegenden Schwingrohrendstücken getrennt werden. Die Schwingrohrendstücke und Grundkörper werden z.B. mittels Gummimuffen verbunden. Auch ein evtl. vorhandener, weiter oben beschriebener Vorsammler, bzw. die Rohrleitung zu diesem, kann auf vergleichbare Weise angebunden werden. Ist kein Vorsammler vorhanden, kann die Einströmung aus der Drosselklappe in den inneren Sammelraum auch axial erfolgen.

Das zuvor beschriebene, mit einzelnen Scheiben aufgebaute Gehäuse kann mit allen anderen Ausführungsformen kombiniert werden, wobei das Nut und Feder Prinzip in jedem fall funktioniert. Die Möglichkeit, durch entsprechende Gestaltung der durch das Gehäuse gebildeten äußeren Resonanzrohrwand ein Resonanzrohr je Resonanzsammler verschließen zu können, ist auch bei diesem Ausführungsbeispiel möglich und sinnvoll.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Zeichnung

Die Erfindung wird anhand von in der Zeichnung dargestellten Ausführungsbeispielen erläutert. Es zeigen:

Figur 1 einen Schnitt durch eine Ansaugvorrichtung mit einer Kombination aus veränderbaren Resonanz- und Schwingrohren für eine 6-zylindrige Brennkraftmaschine;

Figur 2 einen Schnitt durch ein Schwingrohr nach dem Schnitt B-B aus der Figur 1;

Figur 3 einen Schnitt durch ein Resonanzrohr nach dem Schnitt C-C aus der Figur 1;

Figur 4 eine schematische Draufsicht auf die Ansaugvorrichtung nach der Figur 1 mit einem Vorsammler für die Ansaugluft;

Figur 5 und 5a einen Schnitt durch eine mittige Antriebseinheit für die Drehung von Stellscheiben zur Veränderung der Schwing- und Resonanzrohrlängen und -querschnitte und mit Schaltscheiben nach dem Prinzip aneinander vorbeidrehender Fenster und einem Detailschnitt eines Riemenspanners ;

Figur 6 und 7 ein weiteres Ausführungsbeispiel der Schaltscheibe nach dem Prinzip der Irisblende in unterschiedlichen Schaltstellungen;

Figur 8 ein drittes Ausführungsbeispiel der Schaltscheibe nach dem Prinzip der Irisblende mit einer Vielzahl von Lamellen;

Figur 9 ein Prinzipbild der veränderbaren Rohrlängen und -querschnitte in der Ansaugvorrichtung;

Figur 10 ein Diagramm der sich ergebenden Längen und Querschnitte der Schwing- und Resonanzrohre in Abhängigkeit vom Drehwinkel der Stell- und Schaltscheiben und

Figur 11 einen Schnitt durch ein Ausführungsbeispiel einer Ansaugvorrichtung mit einem aus Scheiben zusammengesetzten Gehäuse.

Beschreibung der Ausführungsbeispiele

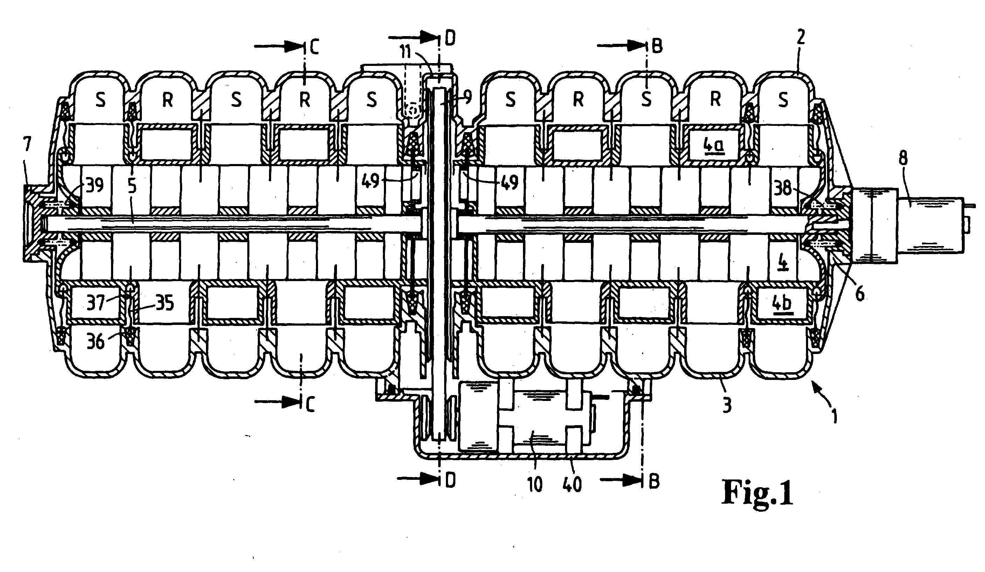

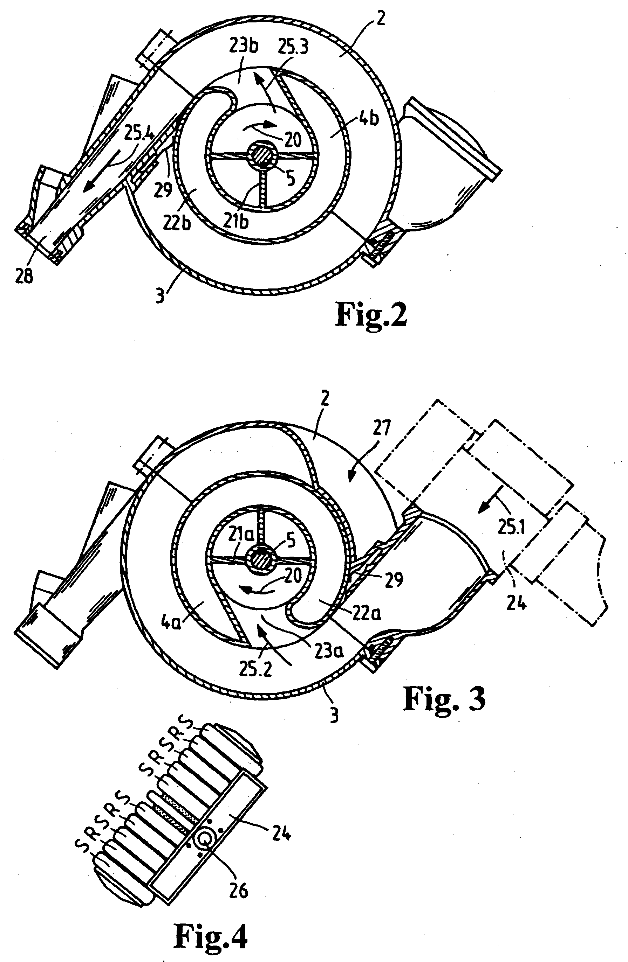

Eine in Figur 1 gezeigte Ansaugvorrichtung für eine hier nicht näher erläuterte Brennkraftmaschine weist ein Gehäuse 1 auf, das aus einzelnen Funktionsbereichen aufgebaut ist, wobei die mit S bezeichneten Bereiche Schwingrohre und die mit R bezeichneten Bereiche Resonanzrohre darstellen. Zur Erläuterung dieser Bereiche wird zusätzlich auf Figur 2 und Figur 3 verwiesen, wobei die Figur 2 einen Schnitt durch eine Schwingrohr S nach der Schnittlinie B-B aus der Figur 1 und die Figur 3 einen Schnitt durch ein Resonanzrohr R nach der Schnittlinie C-C aus der Figur 1 zeigen.

Das Schwingrohr S nach der Figur 2 ist beim Ausführungsbeispiel ein Kunststoffteil, das aus einem oberen Gehäuseteil 2, einem unteren Gehäuseteil 3 und einer drehbaren Stellscheibe 4b im Inneren besteht, wobei die jeweiligen Gehäuseteile 2 und 3 Bestandteil der entsprechenden Gehäuseteile der Ansaugvorrichtung sind. Die jeweiligen Stellscheiben 4b der Schwingrohre S und 4a der Resonanzrohre R sind, wie aus der Figur 1 ersichtlich, auf einer drehbaren Welle 5 angeordnet. Die Welle 5 ist in zwei Lagerdeckeln 6 und 7 mit zwei Stahlscheiben 49 gelagert und kann entweder mit einem Elektromotor 8 direkt oder mit einen Riemenantrieb 9 und einem Elektromotor 10 als Aktuator angetrieben werden.

Die Verstellscheiben 4a (Figur 3) und 4b (Figur 2) können vorzugsweise aus Kunststoff sein, wobei diese evtl. mehrteilig sind und zu einer Scheibe zusammengefügt werden, durch z.B. Schnappen, Schweißen, Kleben oder ähnliches. Ein Verdrängungsvolumen in den Verstellscheiben 4a, 4b am äußeren Umfang ist geeignet, das Volumen im sich ergebenden inneren Resonanzammlervolumen auf ein gewünschtes Maximalvolumen zu begrenzen. Die Resonanzrohre R, die üblicherweise zwei Rohre von entsprechend größerem Querschnitt als die Schwingrohre sind, sind beim erfindungsgemäßen Ausführungsbeispiel für den 6-Zylindermotor aufgelöst in 2x2 Rohre von Schwingrohrdurchmesser. Damit können alle Verstellscheiben 4a, 4b mit Ausnahme der beiden innen liegenden, die wie weiter unten erläutert zugleich Schaltscheiben sind, genau gleich sein. Durch eine entsprechende Gestaltung der Resonanzrohrwand im Gehäuse lassen sich mit gleichen Verstellscheiben auch verschiedene Resonanzrohrquerschnitte realisieren.

Die Befestigung der Verstellscheiben 4a, 4b für das Resonanzrohr R und das Schwingrohr S auf der Welle 5 erfolgt winkelversetzt (z.B.: um 180°). Mit an den Verstellscheiben 4a, 4b anliegenden Querdichtungen 29 wird ein sonst möglicher Kurzschluss der Luftströmung am Einbauort der Querdichtung 29 vermieden. Eventuell können die inneren Scheiben (Schaltscheiben) anders ausgeführt werden, um einen größeren Querschnitt für die Umschaltung zwischen der unten noch erläuterten Schwingrohr- und Resonanzaufladung zu erhalten.

Die gesamte Ansaugvorrichtung 1 ist somit in Schalenbauweise, vorzugsweise aus Kunststoff, aufgebaut und besteht aus den zwei Gehäuseteilen 2 und 3, den Lagerdeckeln 6 und 7 für die Welle 5, wobei eine weiterer Bereich 11 der Gehäuseteile eine Abdeckung für den Riemenantrieb 9 darstellt und einem weiter unten beschriebener Deckel eines Vorsammlers für die angesaugte Luft vorhanden ist. Die Verbindung dieser Gehäuseteile kann mittels Schweißen, Schrauben und/oder Schnappen, Kleben, Umspritzen, Warmnieten, Kaltnieten oder Klammern etc. erfolgen. Die zentrale Welle 5 kann hierbei entweder durchgehend ausgeführt werden oder im Aufsteckbereich der mittigen Riemenscheibe für den Riemenantrieb 9 geteilt sein. Die Lagerung der Welle 5 an den Stirnseiten der Ansaugvorrichtung 1 erfolgt in den Lagerdekkeln 6 und 7 bzw. in darin eingesetzte Lager. Die mittige Lageraufnahme im Bereich des Riemenantriebs 9 kann auch durch die massiven Stahlscheiben 49 anstatt mit dünnen Dichtecheiben erreicht werden. Dieses sog. Stahlgerippe gibt dem Gehäuse der Ansaugvorrichtung eine Steifigkeit, wobei die Stahlscheiben gleichzeitig die Fixpunkte bzgl. des Längenausgleichs sind. Toleranzen wirken sich ausgehend von den mittigen Stahlscheiben nach außen in beide Richtungen aus.

Die Funktion der Ansaugvorrichtung wird zunächst anhand der Figuren 2 und 3 erläutert. Die Verstellscheiben 4a (Figur 3) und 4b (Figur 2) sind gemäß dem Pfeil 20 um einen Winkel von ca. 270° drehbar und weisen ein auf Speichen 21a, 21b angeordnetes Umfangselement 22a, 22b auf, das so ausgestaltet ist, dass es mindestens eine Verbindungsöffnung 23a, 23b freigibt. Die in der Ansaugvorrichtung angesaugte Luft gelangt durch einen Vorsammler 24 gemäß Pfeil 25 nach der Figur 3 in das Resonanzrohr R.

Der Vorsammler 24 ist aus Figur 4 in der Draufsicht zu entnehmen, wobei die angesaugte Luft durch eine hier nicht dargestellte Drosselklappe in den Eingang 26 des Vorsammlers 24 einströmt.

Die angesaugte Luft strömt weiter durch das Resonanzrohr R nach der Figur 3 gemäß dem Pfeil 25.1 und kann durch die Verbindungsöffnung 23a zentral in den Bereich der Verstellscheibe 4a und dann durch das gemeinsame Resonanzvolumen gemäß dem Pfeil 25.3 nach der Figur 2 durch die Verbindungsöffnung 23b in das axial benachbarte Schwingrohr S eintreten und gelangt so zum Einlass am Zylinderkopf der Brennkraftmaschine gemäß dem Pfeil 25.4 am Ausgang 28.

Bei den in den Figuren 2 und 3 dargestellten Stellungen der Verstellscheiben 4a und 4b ist somit ein kurzes Saugrohr realisiert, da die Luft nicht die ganze Länge der Rohre R und S am äußeren Umfang durchströmen muss.

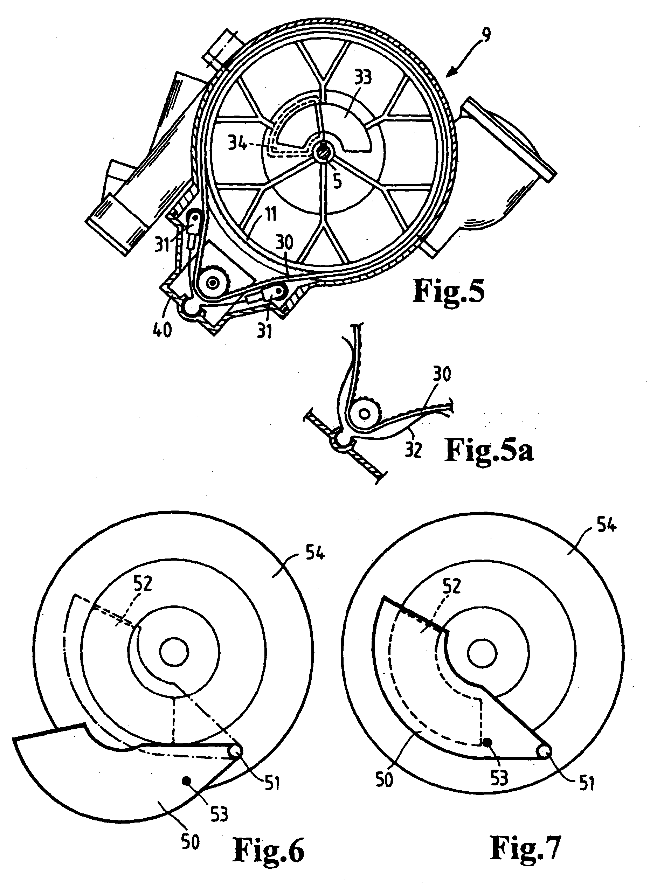

Aus Figur 5 ist der Antrieb 9 für die Verstellung der Verstellscheiben 4a und 4b über die Riemenscheibe 11 und den Elektromotor 10 gezeigt. Der Antrieb 9 kann so ausgeführt werden, dass zusätzlich eine Lageerkennung der Riemenscheibe 11 oder des Motors 10 durchführbar ist.

Eine Vorrichtung zur Spannung des Antriebsriemens 30 ist über Rollen 31 oder alternativ nach Figur 5a über einen federnden Gleitschuh 32 realisiert. Ein Gehäusedeckel 40 des Elektromotors 10 trägt hier gleichzeitig den Riemenspanner 31 oder 32 und sorgt gleichzeitig für die Befestigung des Elektromotors 10. Diese Abdeckung 40 kann schwingungsgedämpft ausgeführt sein. Die Vorrichtung zur Riemenspannung muß den beiden Drehrichtungen Rechnung tragen, und kann daher in Form einer beidseitig von außen den Riemen 30 spannenden Einheit, wie erläutert mit Rolle 31 oder Gleitschuh 32, ausgeführt sein. Eine im Gehäusedeckel 40 drehbare Lagerung der Riemenspanneinrichtung beeinflußt deren Funktion positiv, da der Leertrum stärker gespannt wird, wenn der Lasttrum den Riemenspanner auf seiner Seite wegbiegt.

Als Ausführungsformen des elektromotorischen Antriebs 9 bzw. 10 kommen auch weitere Aktuatoren in Frage. Zum Beispiel ein Schrittmotor, der eventuell mit einer integrierten elektronischen Ansteuerung versehen ist oder ein Gleichstrommotor mit einer Lageerkennung, zum Beispiel über ein Potentiometer oder einen Inkrementalgeber. Der Anbau dieser Aktuatoren kann alternativ zur dargestellten Ausführungsform auch Achse in Achse stirnseitig abstehend erfolgen. Er kann baukastenartig links oder rechts anbaubar mit Stirnradgetriebe sein, stirnseitig anliegend mit Schnekkentrieb, stirnseitig nach innen eingesteckt oder in den Gehäusedeckel integriert sein.

Weiterhin ist in der Figur 5 entsprechend einem Schnitt D-D in der Figur 1 eine Vorrichtung zur Umschaltung zwischen Resonanz- und Schwingrohraufladung in der Ansaugvorrichtung gezeigt, wobei auf der Welle 5 eine entsprechend modifizierte Verstellscheibe mit einem drehenden Fenster 33 und eine feststehende Dichtschaltscheibe (Stahlscheibe 49) mit einem Fenster 34 vorhanden ist, deren Funktion weiter unten erläutert wird.

Auf der Welle 5 sind auch, wie aus der Figur 1 ersichtlich, die Verstellscheiben 4a, 4b (hier in Summe 10 Stück) verdrehsicher befestigt, die aber leicht taumelnd gelagert sind, um einen eventuellen Planschlag auszugleichen. Die Verstellscheiben 4a für die Schwingrohre S und 4b für die Resonanzrohre R liegen wechselweise nebeneinander und drehen sich gleichsinnig. Die Schwingrohre S haben den Abstand der Zylinder der angeschlossenen Brennkraftmaschine. Die Resonanzrohre R liegen in den sich ergebenden Lükken dazwischen. Dies führt zu einer sehr kompakten Bauweise.

Zwischen den Verstellscheiben 4a und 4b liegt jeweils eine, im Gehäuse feststehende Dichtgleitscheibe 35, beispielsweise aus Federstahlblech und einem äußeren angespritzten Dichtungsring 36. Der äußere, elastische Dichtungsring 36 dichtet hierbei gegen das Gehäuse 1 der Ansaugvorrichtung ab, wodurch ein zweigeteiltes Gehäuse mit der unvermeidlichen Teilungsfuge einsetzbar ist. Der innere Bereich der Federstahlscheibe 35 ist Dichtung und zugleich idealer Reibpartner der Verstellscheiben 4a und 4b, wobei der äußere Bereich der Federstahlscheibe 35 durch eine wellmembranähnliche Prägung für eine toleranzausgleichende Entkopplung zwischen der Dichtung außen und der Dicht-/ Gleitfläche innen sorgt.

Mit dem oben beschriebenen Antrieb kann über eine Drehung der Achse 5 das anhand der Verstellscheiben 4a und 4b nach den Figuren 2 und 3 beschriebene Verstellprinzip für die Veränderung der Schwing- und Resonanzrohrlängen und -querschnitte in Abhängigkeit vom Verstellwinkel durchgeführt werden. Wie erwähnt sind die Verstellscheiben 4a und 4b in den Figuren in der kurzen Stellung dargestellt. Die Verstellscheiben 4a und 4b können um ca. 270° im Uhrzeigersinn gedreht werden. Da hier alle Verstellungen von ein und dem selben Antrieb 9 ausgeführt werden, sind die Größen bei festliegender Geometrie nicht unabhängig voneinander einstellbar. Das gegenseitige Zusammenspiel der einzelnen Veränderungen muß bereits bei der Konstruktion berücksichtigt werden.

Abweichend vom hier dargestellten Konzept kann z.B. die anhand der Figur 5 beschrieben Umschaltung zwischen Schwingrohr- und Resonanzrohraufladung oder die Resonanzrohrquerschnittsänderung auch mit einem separatem Stellmotor erfolgen. Durch das Einfügen von Freiläufen und Federn können z.B. Resonanzrohrverstellscheiben 4b und Schwingrohrverstellscheiben 4a funktionell entkoppelt werden.

In dem in der Figur 5 dargestellten Fall handelt es sich um eine Schwingrohraufladung, wenn sich beide Resonanzsammlervolumen 42 und 43 durch das Öffnen des Verbindungsquerschnitts der Fenster 33 und 34 nahezu wie ein einziger Resonanzsammler verhalten. Resonanzaufladung liegt vor, wenn der Verbindungsquerschnitt geschlossen ist. Die Umschaltung erfolgt mittels der anhand der Figur 5 beschriebenen Verstell- und Dichtschaltscheiben, die gegeneinander verdrehbarer sind und von denen eine gehäusefest ist, d.h. sich nicht dreht. Die andere kann gegenüber den Verstellscheiben 4a und 4b fest sein oder auch mittels Freilauf, Feder oder ähnlichem entkoppelt werden, so daß der maximale Verdrehwinkel dieser Scheiben ungleich dem der Verstellscheiben sind (in diesem Fall sind evtl. auch größere Fensterquerschnitte realisierbar). Der Verbindungsquerschnitt zwischen den Resonanzsammlern 42 und 43 Sammlern ist geöffnet, wenn sich die Fenster 33 und 34 in beiden Schaltscheiben überdecken, sonst ist er geschlossen.

Die Gestaltung der Geometrie der Fenster nach der Figur 5 kann zur Gestaltung der Öffnungscharakteristik ( hier der Öffnungsquerschnitt zwischen den Resonanzvolumen 42 und 43 über dem Verdrehwinkel) benutzt werden. So ist es durch eine entsprechende Gestaltung der Fenster möglich den Verbindungsquerschnitt ideal dem Motorbetriebsverhalten anzupassen und dann z.B. bei sehr hohen Drehzahlen wieder auf Resonanzaufladung umzuschalten, nach dem mit steigender Drehzahl bei mittleren Drehzahlen von Resonanzaufladung auf Schwingrohraufladung umgeschaltet wurde. Der maximale Querschnitt sollte bei 6-Zylindermotoren mindestens 1,5 bis 2,0 mal so groß sein wie der Schwingrohrquerschnitt. Alternativ sind auch Lösungen nach dem Prinzip eines Foto-Objektives mit einer Irisblende möglich, die in Figur 6, Figur 7 und Figur 8 dargestellt sind. Dabei werden bei der Figur 6 und 7 schwertartige Lamellen 50 um eine Achse 51 in die Ebene des Fensters 52 geschwenkt. Diese Lamellen 50 können das Fenster 52 freigeben oder dicht verschließen. Die Ansteuerung kann mittels eines Nockens 53 an der Lamelle 50 und einer Führung durch die verstellscheibenfeste Dichtschaltscheibe 54 erfolgen. Die Führung kann dabei komplett von dieser Dichtschaltscheibe 54 übernommen werden, es sind keine Rückstellfedern oder ähnliches erforderlich. Die Dichtschaltscheibe 54 kann dabei durch besondere Ausbildung der Stahlscheibe 49, der jeweils anliegenden Verstellscheibe oder von einem separaten Blendenbestandteil hergestellt sein. Die Figur 6 zeigt die geöffnete und die Figur 7 die geschlossene Stellung.

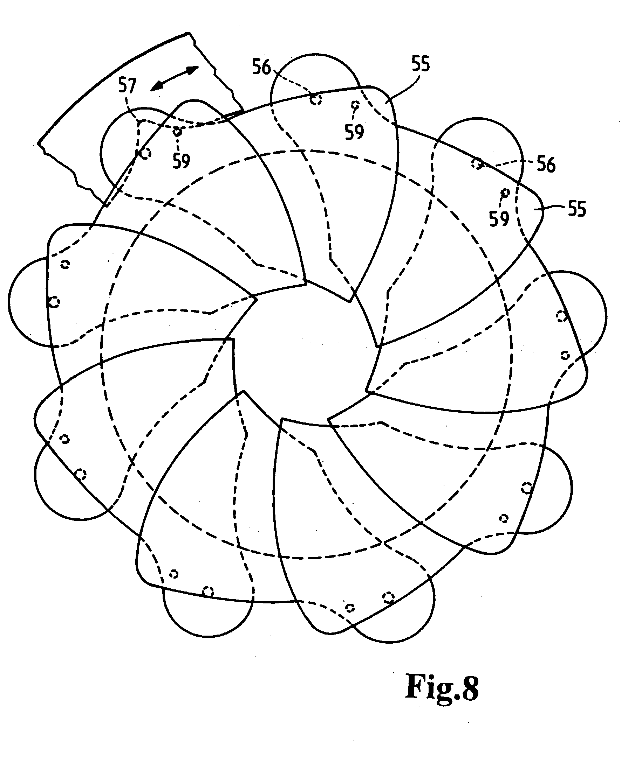

Aus Figur 8 ist als drittes Ausführungsbeispiel eine Abwandlung des Ausführungsbeispiels nach den Figuren 6 und 7 zu entnehmen. Hier sind eine Anzahl von Lamellen 55 so angeordnet, dass sie jeweils um einen Drehpunkt 56 so verschoben werden können, dass sich eine veränderliche Irisblende ergibt. Die Führung der Lamellen 55 um den Drehpunkt 56 kann hier beispielsweise mittels eines Innenzahnkranzes 57 (der hier nur ausschnittsweise gezeigt ist) an entsprechenden Nocken an den Lamellen, in vergleichbarer Weise wie anhand der Figuren 6 und 7 erläutert, vorgenommen werden.

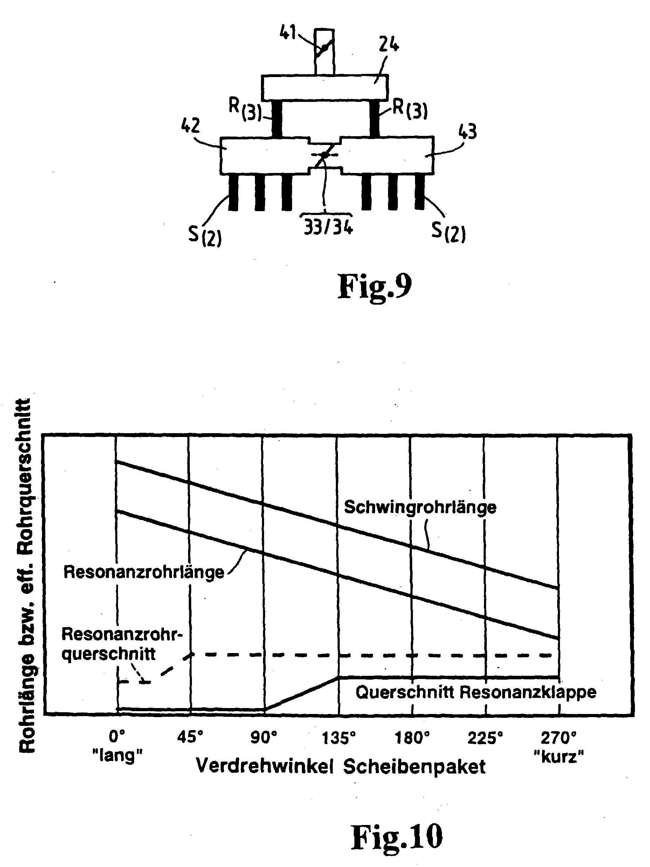

In Figur 9 ist schematisch gezeigt, wie die Ansaugluft durch eine Drosselklappe 41 in den Vorsammler 24 gelangt, dann durch die in Länge und Querschnitt veränderbaren Resonanzrohre R in ein Resonanzvolumen 42 und 43 und dann in die an die Zylindereinlässe angeschlossenen längenveränderlichen Schwingrohre S strömt. Die beiden Resonanzvolumen 42 und 43 sind über die beispielsweise in der Figur 5 dargestellten Fenster 33 und 34 zusammenschaltbar oder trennbar. Dadurch erfolgt eine Umschaltung zwischen Resonanz- und Schwingrohraufladung in der Ansaugvorrichtung.

Die Abdichtung der einzelnen Schwing- und Resonanzrohre R und S untereinander und der Resonanz- und Schwingrohre R/S zum Resonanzsammler 42, 43 ist bei der Erfindung wichtig für die Funktion des Saugrohres. Die Dichtung 36 (vgl. Figur 1) am äußeren Umfang der Dichtscheiben 35 ermöglicht insbesondere die Abdichtung zwischen den Schwingrohren S und den Resonanzrohren R an der Stoßstelle der Gehäusedeckel 2 und 3. Die Abdichtung zwischen dem Schwingrohr S bzw. dem Resonanzrohr R und dem Resonanzsammler erfolgt an einer Reibfläche 37 zwischen Federstahlblech der Dichtscheibe 35 und der jeweiligen Verstellscheibe 4a, 4b.

Die Verstellscheibenpakete der linken und rechten Hälfte der Ansaugvorrichtung 1 werden mittels Federn verspannt. Die Stärke der Federvorspannung ist experimentell zu ermitteln. Sie muss gerade so hoch sein, dass die Scheiben dicht genug aneinander anliegen und die Reibung trotzdem noch klein genug bleibt um die nötige Antriebsleistung so gering wie möglich zu halten. Die Federspannung sollte bei Längentoleranzen in den Scheibenpaketen nicht zu stark schwanken (kleine Federkonstante). Die Federn 38 und 39 befinden sich an den Stirnseiten in den Lagerdeckeln 6 und 7.

In Figur 10 ist ein Diagramm der Veränderungen in der Geometrie der Ansaugvorrichtung 1 in Abhängigkeit vom Verdrehwinkel der angetriebenen Welle 5 gezeigt. Die sogenannte Schwingrohrlänge ist der kürzeste Weg der Rohrquerschnittsmittellinie vom Resonanzsammler bis zum Einlassventil der Brennkraftmaschine hinter dem Ausgang 28 des Schwingrohres S nach der Figur 2. Sie wird durch Verdrehen der Verstellscheiben 4b verkürzt (vorteilhafterweise z.B. bei hohen Motordrehzahlen) oder verlängert (vorteilhafterweise z.B. bei niedrigen Motordrehzahlen). Die in kurzen Stellungen abzweigenden totem Arme, d.h. die undurchströmten Rohrstücke, können bei Bedarf durch, hier nicht dargestellte, an die Verstellscheiben 4b angebrachte Zungen abgedeckt werden. Die Schwingrohrlänge wird auch verstellt, wenn es sich eigentlich um eine Resonanzaufladung handeln soll, da die Drehung miteinander gekoppelt ist.

Die Resonanzrohrlänge ist der kürzeste Weg der Rohrquerschnittsmittellinie des Rohres R vom Vorsammler 24 bis zur Mündung in den Resonanzsammler nach der Verbindungsöffnung 23a nach der Figur 3. Sie wird durch Verdrehen der Verstellscheiben 4a verkürzt (vorteilhafterweise z.B. bei hohen Motordrehzahlen) oder verlängert (vorteilhafterweise z.B. bei niedrigen Motordrehzahlen). Die in kurzen Stellungen abzweigenden toten Arme können auch hier bei Bedarf durch an die Verstellscheiben 4a angebrachte Zungen abgedeckt werden. Die Resonanzrohrlänge wird auch verstellt, wenn es sich eigentlich um eine Schwingrohraufladung handeln soll, da die Drehung miteinander gekoppelt ist.

Der Resonanzrohrquerschnitt ist die Summe aller Rohrquerschnitte, die den Vorsammler 24 und einen Resonanzsammler, wie oben beschrieben, verbinden. Im Falle einer 6-zylindrigen Brennkraftmaschine liegen hier somit 2x2 Resonanzrohre vor. Davon kann jeweils eines in vorteilhafterweise bei niedrigen Motordrehzahlen verschlossen werden, um den Querschnitt zu verringern. Dies erfolgt am einfachsten mittels einer entsprechend Kanalgeometrie des Resonanzrohres R in der entsprechenden Gehäusehälfte 2 nach der Figur 3. In der langen Resonanzrohrstellung ist hierbei jeweils auf einer Seite der Ansaugvorrichtung die Mündung eines Resonanzrohres zum Resonanzsammler durch das Überdecken mit der Wand der Gehäusehälfte 2 an einer Stelle 27 verschlossen. Es sind alternativ auch Einlegeteile denkbar, die in bestimmten Positionen der Verstellscheibe 4a (in der langen Position) das Durcheströmen des Resonanzrohres R verhindern.

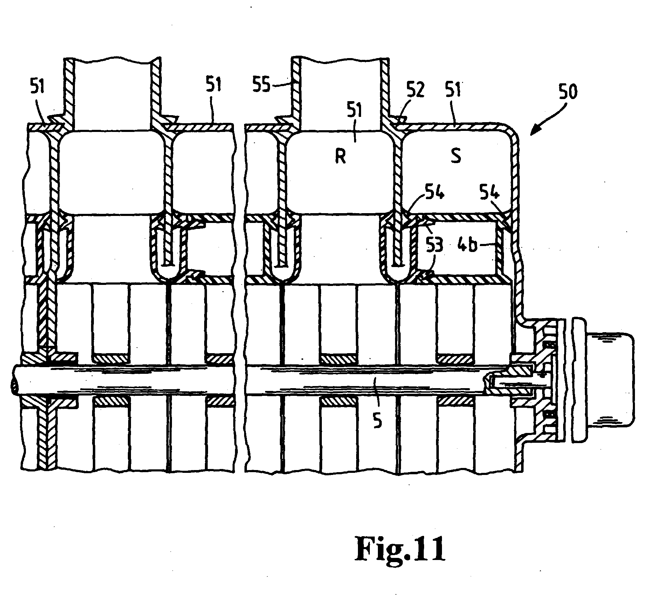

Ein Ausführungsbeispiel nach Figur 11 zeigt alternativ ein Gehäuse 50 einer Ansaugvorrichtung, die in den wesentlichen Funktionen den zuvor beschriebenen Ausführungsbeispielen entspricht, jedoch anstatt eines zweigeteilen Gehäuses aus Ober- und Unterteil das aus Scheiben 51 zusammengesetztes Gehäuse 50 aufweist. Die sich somit senkrecht zur Welle 5 erstreckenden Gehäusescheiben 51 bilden jeweils die Resonanzrohre R und die Schwingrohre S und sind an einer Fügestelle 52 jeweils dichtend aneinander gepackt und miteinander verbunden. Innen in den Rohren R und S sind die jeweiligen anhand der Figuren 2 und 3 beschriebenen Verstellscheiben 4a und 4b angeordnet, die ebenfalls aus Schalen aufgebaut sind und an einer Fügestelle 53 aneinandergefügt sind.

Die Verstellscheiben 4a und 4b nach der Figur 11 weisen an ihrem Umfang jeweils Dichtlippen 54 auf, die an der jeweiligen Scheibenwand bei der Drehung der Verstellscheiben 4a und 4b gleiten können und trotzdem eine Abdichtung für den Ansaugstrom gewährleisten. Bei dem in der Figur 11 dargestellten Schnitt ist darüber hinaus auch ein Rohrabzweig bzw. ein Rohrstück 55 für die Ankopplung des Resonanzrohres R an den Anströmpfad bzw. an den Vorsammler gezeigt. Hierbei kann dieses Rohrstück 55 komplett mit der jeweiligen Gehäusescheibe 51 hergestellt werden.

**Patentansprüche**

1.  Ansaugvorrichtung für eine Brennkraftmaschine, mit

    -   einer in vorgegebenen Grenzen veränderbaren Geometrie des sich ergebenden Ansaugrohres, **dadurch gekennzeichnet, dass**

    -   wahlweise eine Resonanz- oder Schwingrohraufladung im gesamten Ansaugrohr herstellbar ist und dass

    -   die Geometrie jeweils mindestens eines Schwingrohres (5) und eines über ein Resonanzvolumen (43,43) gekoppelten Resonanzrohres ( R) in vorgegebenen Grenzen veränderbar ist.

2.  Ansaugvorrichtung nach Anspruch 1 , **dadurch gekennzeichnet, dass**

    -   die Länge des Schwingrohres (S) und/oder des Resonanzrohres (R) stufenlos verstellbar ist.

3.  Ansaugvorrichtung nach Anspruch 1 oder 2 , **dadurch gekennzeichnet, dass**

    -   eine der Zylinderzahl der Brennkraftmaschine entsprechende Zahl der Schwingrohre (S) mit dazwischen liegenden Resonanzrohren (R) vorhanden sind, dass

    -   in den Resonanzrohren (R) von einer mittig gelagerten Welle (5) drehbar angetriebene Verstellscheiben (4a) angeordnet sind, die die wirksame Länge des Resonanzrohres (R) von einem Vorsammler (24) bis zu dem Resonanzvolumen (42,43) stufenlos verändern und dass

    -   in den Schwingrohren (S) von der mittigen Welle (5) drehbar angetriebene Verstellscheiben (4b) angeordnet sind, die die wirksame Länge des Schwingrohres (S) vom Resonanzvolumen (42,43) bis zu den Zylindereinlässen der Brennkraftmaschine stufenlos verändern.

4.  Ansaugvorrichtung nach Anspruch 3, **dadurch gekennzeichnet, dass**

    -   die Verstellscheiben (4a,4b) der Resonanz- und Schwingrohre (R,S) drehbar miteinander mechanisch gekoppelt sind und eine gleichsinnige Veränderung der Resonanz- und Schwingrohrlängen ausführen.

5.  Ansaugvorrichtung nach einem der vorhergehenden Ansprüche, **dadurch gekennzeichnet, dass**

    -   sich jeweils eine gleiche Anzahl von Resonanz- und Schwingrohren (R,S) beidseitig einer Resonanzschaltung (33,34) befinden, die im geöffneten Zustand die jeweiligen Resonanzvolumen (42,43) miteinander verbindet zur Schwingrohraufladung und im geschlossenen Zustand die jeweiligen Resonanzvolumen (42,43) trennt zur Resonanzrohraufladung und dass

    -   ein Verstellmotor (10) sowohl für die Drehwinkeländerung der Verstellscheiben (4a,4b) und für die Betätigung der Resonanzschaltung (33,34) angeordnet ist.

6.  Ansaugvorrichtung nach Anspruch 5, **dadurch gekennzeichnet, dass**

    -   der Verstellmotor (19) einen mittigen Riemenantrieb (9) oder ein Getriebe antreibt, der oder das über die Welle (5) die Verstellung der Verstellscheiben (4a,4b) und der Resonanzschaltung vornimmt.

7.  Ansaugvorrichtung nach Anspruch 6 , **dadurch gekennzeichnet, dass**

    -   die Resonanzschaltung aus einer feststehenden Dichtschaltscheibe mit einem Fenster (34) und einer mit den Verstellscheiben (4a,4b) mitdrehenden entsprechend modifizierten Verstellscheibe mit einem Fenster (33) oder die Resonanzschaltung aus einer feststehenden Dichtschaltscheibe mit einem Fenster (34) und einer veränderbaren Irisblende mit mindestens einer Lamelle (50) besteht.

8. Ansaugvorrichtung nach einem der vorhergehenden Ansprüche, **dadurch gekennzeichnet, dass**

- in allen Betriebszuständen der Brennkraftmaschine eine Resonanzaufladung in der Ansaugvorrichtung (1) realisiert ist, wobei die Resonanzrohre (R) und die Schwingrohre (S) so ausgebildet sind, dass bei einer bestimmten Drehzahländerung die Resonanzrohrlängen und die Schwingrohrlängen um unterschiedliche Beträge verlängert bzw. verkürzbar sind.

9. Ansaugvorrichtung nach Anspruch 8, **dadurch gekennzeichnet, dass**

- die unterschiedlichen Längen der Resonanzrohre (R) und der Schwingrohre (S) durch jeweilige Verstellscheiben (4a,4b) unterschiedlichen Durchmessers realisiert sind, wobei das Gehäuse (2,3) der Ansaugvorrichtung in den Bereichen mit einer kleineren Verstellscheibe (4a,4b) entsprechend eingezogen ist, bei Erhaltung des Rohrquerschnittes, wobei

- eine stufige Querschnittsverstellung mindestens eines Resonanzrohres (R) über eine Einschnürung der vom Gehäuse gebildeten Kanalwand in einem vorgegebenen Bereich des entsprechenden Resonanzrohres (R) durchführbar ist oder eine stufige Querschnittsverstellung mindestens eines Resonanzrohres (R) über eine verschiebbare Wand in dem vom Gehäuse gebildeten Kanal des entsprechenden Resonanzrohres (R) durchführbar ist.

10. Ansaugvorrichtung nach einem der vorhergehenden Ansprüche, **dadurch gekennzeichnet, dass**

- der Antrieb (9) über einen Schrittmotor, eventuell mit integrierter Ansteuerung oder über einen Gleichstrommotor mit Drehlageerkennung erfolgt und dass
- eine Vorrichtung (31,32) zur Spannung des Antriebsriemens (11) im Antrieb (9) vorhanden ist, die so gestaltet ist, dass der Riemenzug in beiden Richtungen wirken kann.

11. Ansaugvorrichtung nach einem der vorhergehenden Ansprüche, **dadurch gekennzeichnet, dass**

- die Abdichtung der Schwingrohre (S) und Resonanzrohre (R) untereinander und zum Vorsammler (24) mittels Dichtscheiben (35) aus Federstahlblech erfolgt, die an der Stossstelle zum Gehäuse (1) der Ansaugvorrichtung eine elastische Dichtung (36) aufweisen und an einer Reibfläche (37) zwischen den Verstellscheiben (4a,4b) zu liegen kommt.

12. Ansaugvorrichtung nach einem der vorhergehenden Ansprüche, **dadurch gekennzeichnet, dass**

- die Abdichtung der Schwingrohre (S)und Resonanzrohre (R) untereinander und zum Vorsammler (24) mittels Dichtscheiben (35) aus Kunststoff erfolgt, die an der Stossstelle zum Gehäuse (1) der Ansaugvorrichtung eine elastische Dichtung (36) aufweisen und an einer Reibfläche (37) zwischen den Verstellscheiben (4a,4b) zu liegen kommt.

13. Ansaugvorrichtung nach einem der vorhergehenden Ansprüche, **dadurch gekennzeichnet, dass**

- das Gehäuse (50) der Ansaugvorrichtung (1) senkrecht zur Achse der Verstellscheiben (4a,4b) derart geteilt ist, dass einzelne Gehäusescheiben (51) jeweils die Kontur der Resonanzrohre (R) und der Schwingrohre (S) mit den innenliegenden Verstellscheiben (4a,4b) bilden, wobei

- an den Verstellscheiben (4a,4b) Dichtlippen (54) angebracht sind und dass die Dichtlippen (54) zwischen den Verstellscheiben (4a,4b) und der in das Saugrohr hineinragenden umlaufenden Gehäusewand der jeweiligen Scheibe (51) abdichten.

14. Ansaugvorrichtung nach Anspruch 13, **dadurch gekennzeichnet, dass**

- die Ansaugvorrichtung (1) durch Auffädeln der Gehäusescheiben (51), der Verstellscheiben (4a,4b) und dem Antrieb (9) vormontiert ist und anschließend eine dichtende Verbindung zwischen den Gehäusescheiben (51) herstellbar ist.

Fig.1

**Fig.2**

**Fig. 3**

**Fig.4**

**Fig.5**

**Fig.5a**

**Fig.6**

**Fig.7**

**Fig.8**

**Fig.9**

**Fig.10**

**Fig.11**

**Europäisches Patentamt**

**EUROPÄISCHER RECHERCHENBERICHT**

Nummer der Anmeldung

EP 98 11 5681

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE 38 43 690 A (BAYERISCHE MOTOREN WERKE AG) 5. Juli 1990 <br> * Spalte 2, Zeile 13 - Zeile 45; Abbildungen * <br> --- | 1,2 | F02B27/02 |
| A,D | EP 0 848 145 A (BAYERISCHE MOTOREN WERKE AG) 17. Juni 1998 <br> * Zusammenfassung; Abbildungen * <br> --- | 1 | |
| A,D | DE 39 21 081 A (AUDI NSU AUTO UNION AG) 10. Januar 1991 <br> * Zusammenfassung; Abbildungen * <br> --- | 1 | |
| A | DE 43 13 465 A (VOLKSWAGENWERK AG) 4. November 1993 <br> * Spalte 2, Zeile 66 - Spalte 3, Zeile 12 * <br> --- | 1 | |
| A | PATENT ABSTRACTS OF JAPAN vol. 011, no. 301 (M-628), 30. September 1987 <br> & JP 62 091622 A (NISSAN MOTOR CO LTD), 27. April 1987 <br> * Zusammenfassung * <br> --- | 1 | RECHERCHIERTE SACHGEBIETE (Int.Cl.6) <br><br> F02B |
| A | DE 44 37 663 A (BAYERISCHE MOTOREN WERKE AG) 25. April 1996 <br> * Zusammenfassung; Abbildungen * <br> --- | 1 | |
| A | DE 42 31 804 A (DAIMLER BENZ AG) 8. April 1993 <br> * Zusammenfassung; Abbildung 1 * <br> --- | 1 | |
| A | EP 0 225 620 A (BAYERISCHE MOTOREN WERKE AG) 16. Juni 1987 <br> * Zusammenfassung; Abbildungen * <br> --- | 1 | |

-/--

Der vorliegende Recherchenbericht wurde für alle Patentansprüche erstellt

| Recherchenort | Abschlußdatum der Recherche | Prüfer |
|---|---|---|
| DEN HAAG | 25. Januar 1999 | Alconchel y Ungria,J |

Europäisches
Patentamt

**EUROPÄISCHER RECHERCHENBERICHT**

Nummer der Anmeldung

EP 98 11 5681

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | BAUDER A ET AL: "DIE TRIEBWERKE DES AUDI A8" MTZ MOTORTECHNISCHE ZEITSCHRIFT, Bd. 55, Nr. 5, 1. Mai 1994, Seiten 256-258, 260, 262 - 264, 266/267, XP000439553 * Abbildungen 3,4 * | 1 | |
| | | | **RECHERCHIERTE SACHGEBIETE (Int.Cl.6)** |

Der vorliegende Recherchenbericht wurde für alle Patentansprüche erstellt

| Recherchenort | Abschlußdatum der Recherche | Prüfer |
|---|---|---|
| DEN HAAG | 25. Januar 1999 | Alconchel y Ungria,J |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 98 11 5681

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-01-1999

| Im Recherchenbericht angeführtes Patentdokument | Datum der Veröffentlichung | Mitglied(er) der Patentfamilie | Datum der Veröffentlichung |
|---|---|---|---|
| DE 3843690 A | 05-07-1990 | KEINE | |
| EP 0848145 A | 17-06-1998 | KEINE | |
| DE 3921081 A | 10-01-1991 | WO 9100419 A<br>EP 0479844 A<br>US 5156117 A | 10-01-1991<br>15-04-1992<br>20-10-1992 |
| DE 4313465 A | 04-11-1993 | KEINE | |
| DE 4437663 A | 25-04-1996 | KEINE | |
| DE 4231804 A | 08-04-1993 | KEINE | |
| EP 0225620 A | 16-06-1987 | DE 3544122 A | 19-06-1987 |

EPO FORM P0461

Für nähere Einzelheiten zu diesem Anhang : siehe Amtsblatt des Europäischen Patentamts, Nr. 12/82